# EUROPÄISCHE PATENTSCHRIFT

(11) **EP 1 471 341 B1**
(45) Veröffentlichungstag und Bekanntmachung des Hinweises auf die Patenterteilung: **26.07.2006**
(21) Anmeldenummer: 04007481.7
(22) Anmeldetag: 27.03.2004
(51) Int. Cl.: G01L 19/14, G01D 11/30, G12B 9/08

(54) **Kleinbauende Sensorbefestigung an einem Behältnis mit einer konzentrischen Druckschraube**
Compact sensor mounting on a container with a concentric pressure screw
Fixation d'un capteur compact sur un réservoir au moyen d'une vis de pression concentrique

(30) Priorität: 24.04.2003 DE 10318679
(43) Veröffentlichungstag der Anmeldung: 27.10.2004
(73) Patentinhaber: VEGA Grieshaber KG, 77709 Wolfach (DE)
(72) Erfinder: Kopp, Thomas, 77709 Wolfach (DE); Dieterle, Hermann, 77709 Wolfach (DE)
(74) Vertreter: Patentanwälte Westphal, Mussgnug & Partner

(56) Entgegenhaltungen:
- EP-A- 1 146 326
- DE-A- 10 052 079
- DE-A- 19 748 578
- DE-C- 3 728 043

## Beschreibung

Die Erfindung bezieht sich auf eine Befestigungsanordnung für einen Sensor an einem Behältnis mit den oberbegrifflichen Merkmalen des Patentanspruchs 1.

Eine solche Anordnung ist z. B. aus DE 100 52 079 A1 bekannt.

Als Messeinrichtungen werden beispielsweise in der Papierindustrie in der sogenannten Stoffauflaufdüse Drucksensoren verwendet, mittels derer bei der Papiererzeugung die Papierdicke geregelt wird.

Allgemein bekannte Befestigungsanordnungen für eine Sensoreinrichtung an einem Behältnis sind als ein Gegenflansch an einem vorgesetzten Tubus eines Behältnisses ausgeführt. Für eine Flanschbefestigung weist ein Sensorgehäuse, welches die Sensoreinrichtung aufnimmt, einen Flansch auf, der mit einer Anzahl von Schrauben um den Tubus herum angeordnet wird. Die Anzahl der Schrauben wird entsprechend der erforderlichen Druckbeanspruchung festgelegt. Für die Zwecke der Papierindustrie ist eine Nennabmessung DN25 mit einem Außendurchmesser von 115 mm üblich. Entsprechend groß wird die Öffnung für den Gegenflansch ausgebildet.

Eine derartige Anordnung weist jedoch verschiedene Nachteile auf. So kann bei einem klein dimensionierten Anschlussraum die Druckmesseinrichtung nicht platziert werden. Dies bedingt, den Anschlussraum mit einer Mindestgröße verfügbar zu planen. Außerdem sind die Befestigungsschrauben der Flanschbefestigung im Fall eines eng dimensionierten Anschlussraumes schwer zugänglich. Da teilweise zu wenig Platz zur Verfügung steht, wird der Flansch oftmals zweiseitig abgeflacht und damit die Druckfestigkeit nachteilhaft reduziert.

Die Aufgabe der Erfindung besteht darin, eine einfachere Installation und einen geringer dimensionierten Öffnungsdurchmesser zu ermöglichen.

Diese Aufgabe wird durch eine Befestigungsanordnung für einen Sensor an einem Behältnis mit den Merkmalen des Patentanspruchs 1 gelöst.

Eine bevorzugte Befestigungsanordnung für einen Sensor an einem Behältnis weist ein Behältnis mit einer Behältnis-Durchgangsöffnung von einer Behältnis-Außenseite zum Behältnis-Innenraum, ein Sensorgehäuse mit der darin aufgenommenen Sensoreinrichtung und einem umfangsseitigen Gehäuseanschlag sowie zur Befestigung des Sensorgehäuses im Bereich der Behältnis-Durchgangsöffnung eine Schraubverbindung auf. Das Sensorgehäuse selber ist dabei durch eine Druckschrauben Durchgangsöffnung geführt, wobei der Sensorgehäuseanschlag zwischen einer stirnseitigen Druckfläche der Druckschraube und einem Gegenanschlag im Bereich der Behältnis-Durchgangsöffnung eingespannt wird. Zum Einspannen weist die Druckschraube ein Außengewinde'auf, welches in ein entsprechendes Innengewinde im Bereich der Behältnis-Durchgangsöffnung eingreift.

Vorteilhafte Ausgestaltungen sind Gegenstand abhängiger Ansprüche.

Ein Ausführungsbeispiel wird nachfolgend anhand der Zeichnung näher erläutert. Es zeigen
- Fig. 1: eine Befestigungsanordnung für einen Drucksensor, dessen Gehäuse an.einer Behältnis-Durchgangsöffnung festgelegt ist und
- Fig. 2: eine alternative Ausführungsform dazu.

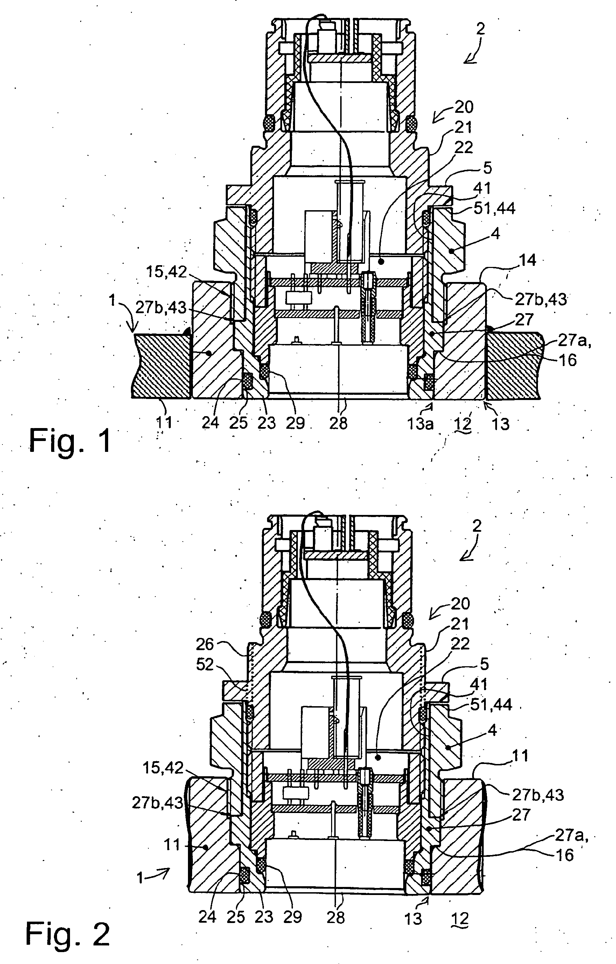

Eine bevorzugte Befestigungsanordnung weist gemäß Fig. 1 eine Vielzahl von Einzelkomponenten auf. An einem Behältnis 1 ist dabei ein Sensor, im dargestellten Ausführungsbeispiel ein Drucksensor 2, wieder lösbar befestigt.

Das Behältnis 1 weist eine Wandung 11 zwischen einem Behältnis-Innenraum 12 und dem Außenraum des Behältnisses 1 auf. Durch die Wandung 11 führt eine Behältnis-Durchgangsöffnung 13 vom Außenraum zum Behältnis-Innenraum 12. An bzw. wie dargestellt in der Behältnis-Durchgangsöffnung 13 ist eine Muffe, bei dem dargestellten Ausführungsbeispiel eine Einschweißmuffe 14, befestigt. Die Muffe 14 weist in ihrer Durchgangsöffnung 13a, welche vom Behältnis-Innenraum 12 zur Außenseite des Behältnisses 1 führt, innenseitig im auswärts gerichteten Abschnitt ein Innengewinde 15 auf. Der Innendurchmesser der Muffen-Durchgangsöffnung 13a verjüngt sich in Richtung zur Innenseite des Behältnisses 1, wobei bei der bevorzugten Ausführungsform die Verjüngung stufenförmig ausgebildet ist, so dass ein Behältnis-Anschlag 16 in der Muffen-Durchgangsöffnung 13a ausgebildet ist.

Der Sensor 2 weist ein Gehäuse 20 auf, welches bei der dargestellten beispielhaften Ausführungsform aus einem außenseitigen Gehäuseteil 21 und einem innenseitigen Gehäuseteil 22 zusammengesetzt ist. Außenseitig und innenseitig wird dabei mit Blick auf die Richtung relativ zu dem Innenraum 12 des Behältnisses 1 bzw. dessen Außenraum verstanden und dient lediglich zur anschaulicheren Beschreibung der Ausrichtung einzelner Komponenten zueinander. In dem außenseitigen Gehäuseteil 21 sind vorzugsweise elektronische Komponenten aufgenommen, während in dem innenseitigen Gehäuseteil 22 vorzugsweise die eigentlichen Sensorkomponenten wie eine Sensorzelle 28 angeordnet sind. Dies ermöglicht einen modulareren Aufbau des Sensors 2. Das außenseitige Gehäuseteil 21 und das innenseitige Gehäuseteil 22 werden durch eine Gehäuseverbindungseinrichtung 23 zusammengehalten, welche diese beiden umgreift. Die Gehäuseverbindungseinrichtung 23 ist bei dem dargestellten Ausführungsbeispiel zugleich der Gehäuseabschnitt, welcher mit den meisten weiteren Komponenten der Befestigungsanordnung zusammenwirkt. Bei einfacheren Ausführungsbeispielen ist entsprechend auch die Anordnung eines Sensors mit einem einteiligen Gehäuse anstelle der Anordnung eines Sensors 2 aus mehreren Gehäuseteilen 21 - 23 vorteilhaft einsetzbar. Nachfolgend werden daher hier relevante Komponenten als Komponenten des Gehäuses 20 aufgeführt, obgleich die Komponenten beim dargestellten Ausführungsbeispiel überwiegend Komponenten der Gehäuseverbindungseinrichtung 23 sind.

Das in der Darstellung eingesetzt dargestellte Gehäuse 20, 23 weist im stirn- bzw. innenseitigen Abschnitt einen Außenumfang auf, welcher dem Innendurchmesser des zum Behältnis-Innenraum 12 zugewandten Abschnitts der Muffen-Durchgangsöffnung 13a entspricht. Dadurch kann das Gehäuse 20, 23 im Rahmen der üblichen Toleranzen passgenau in die Muffen-Durchgangsöffnung 13a eingesetzt werden. Zur Abdichtung weist das Gehäuse 20, 23 eine umlaufende Nut 25 zur Aufnahme einer Dichtung 24, vorzugsweise eines O-Rings auf. Um ein einfaches und für die Dichtung 24 schonendes Einsetzen des Gehäuses 20, 23 in die Muffen-Durchgangsöffnung 13a zu ermöglichen, ist die außenseitige Kante dieses Abschnitts der Muffen-Durchgangsöffnung 13a, vorliegend die Kante des Behältnis-Anschlags 16 gerundet, d. h. ohne eine scharfe Kante ausgebildet.

Um die Einschubtiefe des Gehäuses 20, 23 in die Muffe 14 auf das gewünschte Maß zu beschränken, weist das Gehäuse 20, 23 einen umlaufenden Gehäuseanschlag 27 auf. Der Außenumfang des Gehäuseanschlags 27 entspricht dabei vorzugsweise dem Innenumfang bzw. Innendurchmesser der Muffen-Durchgangsöffnung 13a in deren außenseitigen Abschnitt, d. h. vorliegend dem Abschnitt außerhalb des Behältnis-Anschlags 16. Das Gehäuse 20 kann dadurch nur soweit in die Muffe 14 eingesetzt werden, bis die innenseitige Gehäuseanschlagfläche 27a des Gehäuseanschlags 27 an die außenseitige Anschlagfläche des Behältnis-Anschlags 16 anschlägt.

Zum Festlegen des Gehäuses 20 an dem Behältnis 1 bzw. der Muffe 14 dient eine Druckschraube 4, welche eine zentrale, axiale Durchgangsöffnung 41 aufweist und mit dieser das Gehäuse 20, 23 umgreift. Der zum Behältnis 1 gerichtete innenseitig ausgerichtete Abschnitt der Druckschraube 4 weist einen Außendurchmesser auf, welcher dem Innendurchmesser des auswärts gerichteten innenseitigen Abschnitts der Muffen-Durchgangsöffnung 13a angepasst ist. In diesem Abschnitt weist die Druckschraube 4 außerdem ein Außengewinde 42 auf, welches beim Zusammenbau bzw. in der zusammengesetzten Stellung mit dem Innengewinde 15 der Muffen-Durchgangsöffnung 13a in Eingriff steht. Durch das Einschrauben der Druckschraube 4 in der Muffe 14 bewegt sich die Druckschraube 4 somit in Richtung des Behältnis-Innenraums 12 und in Richtung des Gehäuseanschlags 27 des eingesetzten Gehäuses 20. Der Gehäuseanschlag 27 weist eine außenseitige Gehäuseanschlagfläche 27b auf, welche vorzugsweise eine Breite entsprechend der Wandungsstärke der Druckschraube 4 aufweist. In der zusammengesetzten Stellung presst die als Druckschrauben-Anschlag 43 ausgebildete stirnseitige Fläche der Druckschraube 4 den Gehäuseanschlag 27 gegen den Behältnis-Anschlag 16 und verspannt so das Gehäuse 20, 23 fest mit dem Behältnis 1 bzw. der Muffe 14.

Fig. 2 zeigt eine einfachere Ausführungsform mit einer entsprechend großen Stärke der Wandung 11 des Behältnisses, bei der es alternativ auch möglich ist, direkt die Behältnis-Durchgangsöffung 13 mit einem Behältnis-Anschlag und einem Innengewinde zur Aufnahme des Gehäuses 20, 23 und der Druckschraube 4 auszubilden, so dass die Muffe 14 entfällt.

Der außenseitige Abschnitt der Druckschraube 4 ist gemäß Fig. 1 und Fig. 2 vorzugsweise so ausgebildet, dass ein Ergreifen mit Händen oder einem Werkzeug zum Verschrauben auch bei geringen Dimensionen und/oder in einem gering dimensionierten außenseitigen Zugangsbereich möglich ist.

Zur Abdichtung eines eigentlichen Sensorelements bzw. einer Sensorzelle 28 mit einem Druckaufnehmer im stirnseitigen Bereich des Sensorgehäuses 20, 23 dient vorzugsweise eine weitere Dichtung, insbesondere in Form eines O-Rings 29 zwischen der Innenwandung des Gehäuses 20, 23 und dem Außenumfang der Sensorzelle 28.

Eine solche Anordnung ermöglicht für die Wahl der Befestigungsanordnung eine Behältnis-Öffnung 13 als Behälteranschluss mit einem geringeren Durchmesser als bei bisherigen Anordnungen, da die Befestigung des Sensors, vorliegend einer Druckmesseinrichtung, mit der Druckschraube 4 vorgenommen wird, die bei dem bevorzugten Ausführungsbeispiel um den Sensor 2 zentrisch und drehbar angeordnet ist. Dabei kann die Druckschraube 4 mit einem z. B. für die Papierindustrie üblichen Gewinde als Außengewinde 42 ausgeführt sein, so dass ein Drucksensor 2 mit einem Außendurchmesser mit geringen Maßen ermöglicht wird, beispielsweise Maßen von 30 mm oder weniger als Außendurchmesser. Somit sind Sensoren mit Gehäusen und/oder Sensorzellen mit Außendurchmessern weniger als den üblichen 115 mm in Verbindung mit der Druckmessung in einem Behältnis möglich, wobei der Außendurchmesser nicht nur geringer, sondern sogar vorteilhafter deutlich geringer als die üblichen 115 mm sein kann. Die Abdichtung der Sensorzelle 28 als ein solcher Drucksensor erfolgt dabei vorzugsweise mit Hilfe von O-Ringen 29, 24.

Dadurch, dass die Druckschraube 4 sich um das Gehäuse 20, 23 dreht, wird das Gehäuse 20, 23 über den bundartigen Gehäuseanschlag 27 axial in die Behältnis-Durchgangsöffnung 13 bzw. in die Muffen-Durchgangsöffnung 13a eingeschoben. Unter anderem dadurch, dass die Reibung von Metallflächen geringer ist als die eines Dichtungsmaterials, insbesondere des O-Rings 24, wird dieser bei einer translatorischen Bewegung über eine kurze Strecke weniger beansprucht als bei einer rotierenden Bewegung für den Fall, dass das gesamte Gehäuse 20, 23 mit einer Schraubbewegung in die Behältnis-Durchgangsöffnung bzw. die Muffen-Durchgangsöffnung 13a eingeschraubt werden würde.

Bei dem in Fig. 1 dargestellten Ausführungsbeispiel weist das außenseitige Gehäuseteil 21 einen weiteren, außenseitigen Anschlag 5 auf. Dieser kann als einzelner kleiner Vorsprung oder wie dargestellt als umlaufender Ring ausgebildet sein. Der außenseitige Anschlag dient dazu, die Druckschraube 4 am Gehäuse 20 zu halten, so dass die Druckschraube 4 bei einer Montage oder Demontage des Gehäuses 20 nicht von diesem fallen und verloren gehen kann. Bei diesem Ausführungsbeispiel wird die Druckschraube 4, die entsprechend eine außenseitige Anschlagfläche 44 als Gegenanschlag für den außenseitigen Anschlag 5 des Gehäuses 20 aufweist, bei der Montage des Gehäuses 20 an diesem festgelegt. Die Festlegung erfolgt dabei zweckmäßigerweise so, dass die Druckschraube 4 um das Gehäuse 20 drehbar angeordnet ist. Die Druckschraube 4 ist in Richtung des Behältnisses.1 bzw. in Richtung vom Behältnis 1 weg durch die Anschläge 27, 5 begrenzt. Bei einer Demontage wird zusammen mit der Schraubbewegung nicht nur die Druckschraube 4 gegenüber dem Behältnis 1 abgehoben, sondern das gesamte Gehäuse wird mit abgehoben, so dass mit der Schraubbewegung zugleich ein eventueller Haftwiderstand der Dichtung 24 überwunden wird.

Fig. 2 stellt eine Ausführungsform dar, bei welcher die Druckschraube 4 nachträglich über das Gehäuse 20 bzw. das zusammengesetzte Gehäuse 20 geschoben werden kann. Zur Sicherung der Druckschraube 4 gegen deren Verlust weist das Gehäuse 20, 21 ein umlaufendes Außengewinde 26 auf, auf welches ein entsprechender außenseitiger Gehäuseanschlag 5 mit einem Innengewinde 52 aufschraubbar ist. Wenn der außenseitige Gehäuseanschlag 52 ganz auf die Druckschraube 4 aufgeschraubt wird, dient er wie bei dem Ausführungsbeispiel gemäß Fig. 1 als Gegenanschlag bei der Demontage des Sensors 2 vom Behältnis 1.

Vorteilhafterweise ergibt sich auch eine nahezu kraftlose Demontagemöglichkeit für den Fall, dass kein außenseitiger Gehäuseanschlag 5 vorgesehen oder aufgesetzt ist, da die Druckschraube 4 den Tubus bzw. das Gehäuse 20, 23 hält und die Druckschraube 4 unabhängig von einem möglicherweise haftenden O-Ring 24 gelöst werden kann. Dadurch wird in einem ersten Schritt die Klemmkraft von dem Gehäuseanschlag 27 unabhängig von möglichen Haftwiderständen der Dichtung 24 gelöst, woraufhin in einem zweiten Schritt das Gehäuse 20, 23 aus der Muffen-Durchgangsöffnung 13a entnommen werden kann, wobei dann lediglich eine verbleibende Haftreibung der Dichtung 24 zu überwinden ist.

Ein weiterer Vorteil ergibt sich durch die Verwendung der Druckschraube 4 dadurch, dass das Gehäuse 20, 23 nicht über einen herkömmlichen Flansch mit einer Vielzahl von Schrauben an dem Flansch 14 des Behältnisses 1 zu befestigen ist. Dies reduziert deutlich die Anzahl der Bauelemente, welche bei einer Montage und Demontage in einem engen Zugangsraum gehandhabt werden müssen und möglicherweise verloren gehen können. Vorteilhafterweise muss bei der Demontage die Druckschraube 4 lediglich gelöst werden, kann dann aber über dem Gehäuse 20 sitzend mit Hilfe des Gehäuseanschlags 27 angehoben werden, so dass letztendlich bei Montage und Demontage in einem engen Zugangsraum zu der Behältnis-Durchgangsöffnung 13 bzw. der Muffen-Durchgangsöffnung 13a lediglich ein Bauteil 20 zu halten ist, an dem die Druckschraube 4 bereits lose ansitzt.

Wie dies der Zeichnung entnehmbar ist, werden das innenseitige und das außenseitige Gehäuseteil 22, 21 mit Hilfe der Gehäuseverbindungseinrichtung 23 über Anschläge und Gegenanschläge bzw. über in Nuten eingreifende Vorsprünge zusammengehalten. Derartige in Nuten eingreifende Vorsprünge können dabei als Schrumpfyerbindung, bajonettartig oder in sonstiger für sich bekannter Art und Weise ausgebildet sein.

Variationen sind in vielfältiger Art und Weise möglich. So kann beispielsweise der Gehäuseanschlag 27 gemäß der bevorzugten Ausführungsform als ein umlaufender ringförmiger Anschlag ausgebildet sein. Gemäß alternativer Ausführungsformen ist es aber auch möglich, einen oder mehrere Vorsprünge von dem Außenumfang des Gehäuses 20, 23 abstehen zu lassen, welche von der stirnseitigen Fläche der Druckschraube gegen den Behältnis-Anschlag 16 gedrückt werden. Während der dargestellte Gehäuseanschlag 27 ringförmig um das Gehäuse 20, 23 läuft und von diesem seitlich absteht, ist es natürlich auch möglich, in axialer Richtung räumlich beabstandete Gehäuseanschläge vorzusehen, wobei die dem Behältnis 1 zugewandten Anschläge als Gegenanschläge für den Behältnis-Anschlag 16 und die dem Behältnis 1 abgewandten Anschläge als Gegenanschlag für die stirnseitige Anschlagfläche bzw. den Anschlag 43 der Druckschraube 4 ausgebildet sind.

### Bezugszeichenliste:

- 1: Behältnis
- 11: Wandung des Behältnisses
- 12: Behältnis-Innenraum
- 13: Behältnis-Durchgangsöffnung
- 13a: Muffen-Durchgangsöffnung
- 14: Muffe
- 15: Innengewinde in.Durchgangsöffnung 13a
- 16: Behältnis-Anschlag
- 2: Sensor
- 20: Gehäuse
- 21: außenseitiges Gehäuseteil
- 22: innenseitiges Gehäuseteil
- 23: Gehäuseverbindungseinrichtung
- 24: Dichtung/O-Ring (Gehäusebehältnis)
- 25: Nut für Dichtung 24
- 26: Außengewinde für außenseitigen Gehäuseanschlag
- 27: Gehäuseanschlag
- 27b, a: auswärts gerichtete/innenseitige Gehäuseanschlagfläche
- 28: Sensormesszelle
- 29: O-Ring (Sensorzelle-Gehäuse)
- 4: Druckschraube
- 41: Druckschrauben-Durchgangsöffnung
- 42: Außengewinde
- 43: Anschlag von 4, stirnseitig
- 44: Anschlag von 4, außenseitig
- 5: außenseitiger Gehäuseanschlag
- 51: Anschlagfläche von 5
- 52: Innengewinde von 5

## Patentansprüche

1. Befestigungsanordnung für einen Sensor (2) an einem Behältnis (1) mit
- einer Behältnis-Durchgangsöffnung (13, 13a) zum Innenraum (12) des Behältnisses (1) hin und mit einem Behältnis-Anschlag (16),
- einem Gehäuse (20 - 23) des Sensors (2) mit einer darin angeordneten Sensoreinrichtung (28) sowie
- einer Druckschraube (4), die sich beim Verspannen in Schraubeingriff mit einem Gewinde (13, 13a) des Behältnisses (1) befindet,
**dadurch gekennzeichnet , dass** das Gehäuse (20-23) einen umfangsseitigen Gehäuseanschlag (27) mit außenseitigen und innenseitigen Gehäuseanschlagsflächen (27a, 27b) aufweist,
- die Druckschraube (4) mit einer Druckschrauben-Durchgangsöffnung (41) das Gehäuse (20, 23) umgibt und eine Druckfläche (43) zum Drücken des Gehäuseanschlags (27) gegen den Behältnis-Anschlag (16) zum Verspannen des Sensorgehäuses (20, 23) und des Behältnisses (1) aufweist.

2. Befestigungsanordnung nach Anspruch 1 für einen Drucksensor (2) als Sensoreinrichtung an dem Behältnis (1) mit
- einem Drucksensorgehäuse (2) als Sensorgehäuse, das eine Drucksensoreinrichtung (28) als Sensoreinrichtung aufnimmt und das den zumindest teilweise umlaufenden Gehäuseanschlag (27) aufweist,
- einer Befestigungseinrichtung (14) am Behältnis (1), wobei die Befestigungseinrichtung (14) eine Durchgangsöffnung (13, 13a) als Behältnis-Durchgangsöffnung zum Innenraum (12) des Behältnisses (1), den Behältnis-Anschlag (16) und ein Gewinde (15) zum Festlegen des Gehäuses (20, 23) an der Befestigungseinrichtung (14) aufweist, und
- einem Befestigungsmittel (4) zum Festlegen des Gehäuseanschlags (27) am Behältnis-Anschlag (16),
**dadurch gekennzeichnet, dass**
- das Gewinde (15) als Innengewinde (15) in der Behältnis-Durchgangsöffnung (13, 13a) und
- das Befestigungsmittel als die Druckschraube (4) mit einem Außengewinde (42) zum Eingreifen in das Innengewinde (15) und mit einer Druckschrauben-Durchgangsöffnung (41) in axialer Richtung zum zumindest teilweisen Durchführen des Gehäuses (20, 23) und mit einer stirnseitigen Druckfläche (43) zum festlegenden Drücken des Gehäuseanschlags (27) gegen den Behältnis-Anschlag (16) ausgebildet ist.

3. Befestigungsanordnung nach Anspruch 2, bei der das Innengewinde (15) für einen Schraubeingriff der Druckschraube (4) in einem auswärts gerichteten Abschnitt der Behältnis-Durchgangsöffnung (13) oder einer Muffen-Durchgangsöffnung (13a) aufgebildet ist.

4. Befestigungsanordnung nach einem vorstehenden Anspruch, bei der der Behältnis-Anschlag (16) als Muffe am Behältnis (1) ausgebildet ist.

5. Befestigungsanordnung nach einem vorstehenden Anspruch, bei der die Druckschraube (4) die zentrale, axiale Druckschrauben-Durchgangsöffnung (41) derart aufweist, dass sich die Druckschraube (4) beim Festlegen des Sensors (2, 20, 23) am Behältnis (1) um das Gehäuse (20, 23) dreht.

6. Befestigungsanordnung nach Anspruch 5, bei der das Gehäuse (20, 23) mit einer umlaufenden Dichtung (24) gegenüber der Behältnis-Durchgangsöffnung (13, 13a) abgedichtet ist, wobei die Druckschraube (4) beim Schrauben zum rotationsfreien, axialen Einschieben des Gehäuses (20, 23) in die Behältnis-Durchgangsöffnung (13) ausgebildet ist.

7. Befestigungsanordnung nach einem vorstehenden Anspruch, bei welcher der Gehäuseanschlag (27) außenseitig vom Gehäuse (20, 23) absteht und eine in Richtung des Behältnisses (1) gerichtete Gehäuseanschlagfläche (27a) zum Begrenzen der Einschubtiefe des Gehäuses (20, 23) in die Behältnis-Durchgangsöffnung (13, 13a) durch Anschlagen an den Behältnis-Anschlag (16) aufweist.

8. Befestigungsanordnung nach einem vorstehenden Anspruch, bei der der Behältnis-Anschlag (16) innerhalb der Behältnis-Durchgangsöffnung (13) bzw. Muffen-Durchgangsöffnung (13a) ausgebildet ist.

9. Befestigungsanordnung nach einem vorstehenden Anspruch, bei der der Gehäuseanschlag (27) und/oder ein weiterer Gehäuseanschlag, der von dem Gehäuse (20, 23) seitlich absteht, eine vom Behältnis (1) abgewandte Anschlagfläche als Gegenanschlag für die Druckfläche (43) der Druckschraube (4) aufweist.

10. Befestigungsanordnung nach einem vorstehenden Anspruch, bei der die Sensoreinrichtung (28) ein Drucksensor mit einem Außendurchmesser kleiner 115 mm, insbesondere kleiner oder gleich 30 mm ist.

11. Befestigungsanordnung nach einem vorstehenden Anspruch, bei der das Gehäuse (20, 23) in dessen Abschnitt, der in die Behältnis-Durchgangsöffnung (13, 13a) einzusetzen ist, einen Außendurchmesser kleiner 115 mm, insbesondere kleiner oder gleich 30 mm aufweist.

12. Befestigungsanordnung nach einem vorstehenden Anspruch, bei der das Gehäuse (20, 21) einen außenseitigen Gehäuseanschlag (5) aufweist, der vom Gehäuse (20, 21) in einem Abschnitt absteht oder angeordnet ist, welcher sich auf der Seite der Druckschraube (4) befindet, welche vom Behältnis (1) abgewandt ist.

## Claims

1. Fixing arrangement for fixing a sensor (2) on a receptacle (1), comprising
- a receptacle through-hole (13, 13a) leading to the interior (12) of the receptacle (1) and with a receptacle stop (16),
- a housing (20-23) of the sensor (2), with a sensor device (28) arranged thereon, and
- a pressure screw (4) which, upon tightening, is in screw engagement with a thread (13, 13a) of the receptacle (1),
**characterized in that** the housing (20-23) has a circumferential housing stop (27) with outer and inner housing stop faces (27a, 27b),
- the pressure screw (4) with a pressure screw through-hole (41) encompasses the housing (20, 23) and has a pressure face (43) for pressing the housing stop (27) against the receptacle stop (16) in order to fix together the sensor housing (20, 23) and the receptacle (1).

2. Fixing arrangement according to Claim 1 for a pressure sensor (2) as sensor device on the receptacle (1), comprising
- a pressure sensor housing (2) as sensor housing, which receives a pressure sensor device (28) as sensor device and which comprises the at least partially circumferential housing stop (27),
- a fixing device (14) on the receptacle (1), wherein the fixing device (14) comprises a through-hole (13, 13a) as receptacle through-hole leading to the interior (12) of the receptacle (1), the receptacle stop (16) and a thread (15) for securing the housing (20, 23) to the fixing device (14), and
- a fixing means (4) for securing the housing stop (27) to the receptacle stop (16),
**characterized in that**
- the thread (15) is designed as an inner thread (15) in the receptacle through-hole (13, 13a), and
- the fixing means is designed as the pressure screw (4) with an outer thread (42) for engaging in the inner thread (15) and with a pressure screw through-hole (41) in the axial direction for at least partially receiving the housing (20, 23) and with an end pressure face (43) for pressing the housing stop (27) against the receptacle stop (16) to establish a secure connection.

3. Fixing arrangement according to Claim 2, in which the inner thread (15) is designed for a screw engagement of the pressure screw (4) in an outwardly directed section of the receptacle through-hole (13) or a bushing through-hole (13a).

4. Fixing arrangement according to a preceding claim, in which the receptacle stop (16) is designed as a bushing on the receptacle (1).

5. Fixing arrangement according to a preceding claim, in which the pressure screw (4) comprises the central axial pressure screw through-hole (41) in such a way that the pressure screw (4) rotates around the housing (20, 23) when the sensor (2, 20, 23) is secured to the receptacle (1).

6. Fixing arrangement according to Claim 5, in which the housing (20, 23) is sealed with respect to the receptacle through-hole (13, 13a) by means of a circumferential seal (24), wherein the pressure screw (4) is designed to push the housing (20, 23) axially into the receptacle through-hole (13) in a freely rotating manner during the screwing operation.

7. Fixing arrangement according to a preceding claim, in which the housing stop (27) protrudes from the outer side of the housing (20, 23) and has a housing stop face (27a) directed towards the receptacle (1) in order to limit the depth to which the housing (20, 23) is pushed into the receptacle through-hole (13, 13a) by abutment against the receptacle stop (16).

8. Fixing arrangement according to a preceding claim, in which the receptacle stop (16) is formed within the receptacle through-hole (13) or bushing through-hole (13a).

9. Fixing arrangement according to a preceding claim, in which the housing stop (27) and/or another housing stop which protrudes laterally from the housing (20, 23) has a stop face which faces away from the receptacle (1) and serves as a counter-stop for the pressure face (43) of the pressure screw (4).

10. Fixing arrangement according to a preceding claim, in which the sensor device (28) is a pressure sensor with an outer diameter of less than 115 mm, in particular less than or equal to 30 mm.

11. Fixing arrangement according to a preceding claim, in which the housing (20, 23), in the section thereof which is to be inserted into the receptacle through-hole (13, 13a), has an outer diameter of less than 115 mm, in particular less than or equal to 30 mm.

12. Fixing arrangement according to a preceding claim, in which the housing (20, 21) has on its outer side a housing stop (5) which protrudes from the housing (20, 21) or is arranged thereon in a section which is located on the side of the pressure screw (4) that faces away from the receptacle (1).

## Revendications

1. Dispositif de fixation d'un capteur (2) à un récipient (1), comprenant
- une ouverture de passage de récipient (13, 13a) vers l'espace intérieur (12) du récipient (1) et avec une butée de récipient (16),
- un boîtier (20 - 23) du capteur (2) avec une cellule de capteur (28) disposée dans celui-ci, et
- une vis de pression (4) qui lors du serrage se trouve engagée dans un filet (13, 13a) du récipient (1),
**caractérisé en ce que**
le boîtier (20-23) présente une butée de boîtier (27) côté périphérie avec des surfaces de butée de boîtier (27a, 27b) côté extérieur et côté intérieur, et
la vis de pression (4) entoure le boîtier (20, 23) par une ouverture de passage de vis de pression (41) et présente une surface de pression (43) pour pousser la butée de boîtier (27) contre la butée de récipient (16) pour serrer le boîtier de capteur (20, 23) et le récipient (1).

2. Dispositif de fixation selon la revendication 1 d'un capteur de pression (2) servant de capteur à un récipient (1), comprenant :
- un boîtier de capteur de pression (2) servant de boîtier de capteur qui reçoit un capteur de pression (28) servant de capteur et présente la butée de boîtier (27) au moins en partie circulaire,
- un raccord (14) sur le récipient (1), le raccord (14) présentant une ouverture de passage (13, 13a) servant d'ouverture de passage de récipient vers l'espace intérieur (12) du récipient (1), la butée de récipient (16) et un filet (15) pour fixer le boîtier (20, 23) au raccord (14), et
- un moyen de fixation (4) pour fixer la butée de boîtier (27) à la butée de récipient (16),
**caractérisé en ce que**
- le filet (15) est un filet femelle (15) dans l'ouverture de passage de récipient (13, 13a), et
- le moyen de fixation est la vis de pression (4) avec un filet mâle (42) pour s'engrener dans le filet femelle (15) et avec une ouverture de passage de vis de pression (41) dans la direction axiale pour un passage au moins partiel du boîtier (20, 23), et avec une surface de pression (43) côté frontal pour pousser solidement la butée de boîtier (27) contre la butée de récipient (16).

3. Dispositif de fixation selon la revendication 2,
dans lequel le filet femelle (15) est formé dans un segment orienté vers l'extérieur de l'ouverture de passage de récipient (13) ou d'une ouverture de passage de raccord (13a) pour un engagement vissé de la vis de pression (4).

4. Dispositif de fixation selon l'une quelconque des revendications précédentes,
dans lequel la butée de récipient (16) est un raccord sur le récipient (1).

5. Dispositif de fixation selon l'une quelconque des revendications précédentes,
dans lequel la vis de pression (4) présente l'ouverture de passage de vis de pression (41) axiale centrale de telle sorte que la vis de pression (4) tourne autour du boîtier (20, 23) lors de la fixation du capteur (2, 20, 23) au récipient (1).

6. Dispositif de fixation selon la revendication 5,
dans lequel le boîtier (20, 23) est étanché par une garniture d'étanchéité (24) par rapport à l'ouverture de passage de récipient (13, 13a), et la vis de pression (4) est formée pour une insertion axiale sans rotation du boîtier (20, 23) dans l'ouverture de passage de récipient (13) lors du vissage.

7. Dispositif de fixation selon l'une quelconque des revendications précédentes,
dans lequel la butée de boîtier (27) dépasse côté extérieur du boîtier (20, 23) et présente une surface de butée de boîtier (27a) orientée en direction du récipient (1) pour limiter la profondeur d'insertion du boîtier (20, 23) dans l'ouverture de passage de récipient (13, 13a) par une mise en butée contre la butée de récipient (16).

8. Dispositif de fixation selon l'une quelconque des revendications précédentes,
dans lequel la butée de récipient (16) est formée à l'intérieur de l'ouverture de passage de récipient (13) ou de l'ouverture de passage de raccord (13a).

9. Dispositif de fixation selon l'une quelconque des revendications précédentes,
dans lequel la butée de boîtier (27) et/ou une autre butée de boîtier qui dépasse latéralement du boîtier (20, 23) présente une surface de butée détournée du récipient (1) servant de contre-butée pour la surface de pression (43) de la vis de pression (4).

10. Dispositif de fixation selon l'une quelconque des revendications précédentes,
dans lequel le capteur (28) est un capteur de pression avec un diamètre extérieur inférieur à 115 mm, en particulier inférieur ou égal à 30 mm.

11. Dispositif de fixation selon l'une quelconque des revendications précédentes,
dans lequel le boîtier (20, 23), dans son segment à insérer dans l'ouverture de passage de récipient (13, 13a), présente un diamètre extérieur inférieur à 115 mm, en particulier inférieur ou égal à 30 mm.

12. Dispositif de fixation selon l'une quelconque des revendications précédentes,
dans lequel le boîtier (20, 21) présente une butée de boîtier (5) côté extérieur qui dépasse du boîtier (20, 21) dans un segment, ou qui se trouve sur ce segment du côté de la vis de pression (4) opposé au récipient (1).
